# EUROPEAN PATENT APPLICATION

(11) **EP 2 987 401 A1**
(43) Date of publication of application: **24.02.2016**
(21) Application number: 14181439.2
(22) Date of filing: 19.08.2014
(51) Int. Cl.: A01K 1/01

(54) **Floor section for a stable floor**

(71) Applicant: Agra-Matic B.V., 6717 VE Ede (NL)
(72) Inventor: Heideman, Dick Johan, 6717 VE Ede (NL)
(74) Representative: Nederlandsch Octrooibureau

(57) **Abstract**

Floor section for a stable floor, wherein a plurality of floor sections (1) positioned adjacent to each other forms the stable floor. The floor section (1) has a central guide slot (3) along a lengthwise direction of the stable floor for guiding a manure drawer, and in operation forms fluid gutters (7) at side parts of the floor section (1) along the lengthwise direction of the stable floor. The floor section (1) has an inverted V shape with the central guide slot (3) at its apex, and two upper surfaces (2) at an angle (α) of between 2-6% to a level reference surface (9).

## Description

### Field of the invention

The present invention relates to a floor section for a stable floor, wherein a plurality of floor sections positioned adjacent to each other forms the stable floor, wherein the floor section comprises a central guide slot along a lengthwise direction of the stable floor for guiding a manure drawer, and in operation forms fluid gutters at side parts of the floor section along the lengthwise direction of the stable floor.

### Prior art

European patent publication EP-A-2 759 197 discloses a floor slab for a stable floor, which is substantially rectangular and wherein the thickness of the floor slab decreases in a lengthwise direction from a central zone toward the edges of the floor slab in order to form a downward incline towards both edges. The downward inclination is very low, in order to allow cattle to walk on the stable floor without a risk of falling down.

American patent publication US 3,693,782 discloses a livestock confinement area with a floor having depressed flat alleys. In the alleys, a scraper is used having a guide member which runs in a groove in the bottom of the alley.

### Summary of the invention

The present invention seeks to provide an improved stable floor, especially in view of more and more stringent demands on ammonia emissions.

According to the present invention, a floor section according to the preamble defined above is provided, wherein the floor section has an inverted V shape with the central guide slot at its apex, and two upper surfaces at an angle of between 2-6% to a level reference surface. This ensures a high degree of separation of fluid and solid parts of manure on a stable floor, and thus a quicker discharge of the urine content and consequently lower ammonia emissions.

### Short description of drawings

The present invention will be discussed in more detail below, using a number of exemplary embodiments, with reference to the attached drawings, in which
Fig. 1 shows a cross sectional view of a part of a stable floor with a floor section according to an embodiment of the present invention; and
Fig. 2 shows a cross sectional view of a concrete part of an embodiment of a floor section.

### Detailed description of exemplary embodiments

Modem stable floors are designed to meet a number of regulatory requirements, recently especially regulation in the field of ammonia emissions are becoming more and more stringent. Prior art stable floor designs have trouble meeting the ever more demanding requirements in this respect.

Designs are known where the stable floor has open grating plates, and animal manure is collected underneath the stable floor. Disadvantage is that ammonia from the manure can re-enter the stable and contribute to ammonia emission. Other types of stable floors use closed floor slabs, and a drawer is used to regularly sweep a stable floor and collect manure in a manure pit. Furthermore, stable floor designs are known where the floor slabs are provided with features allowing to separate liquid components from the manure (mainly urine) and to collect the liquid manure content using trenches and gutters, e.g. using a centrally located and lowered gutter. Still improvements are needed, especially in view of ammonia emissions.

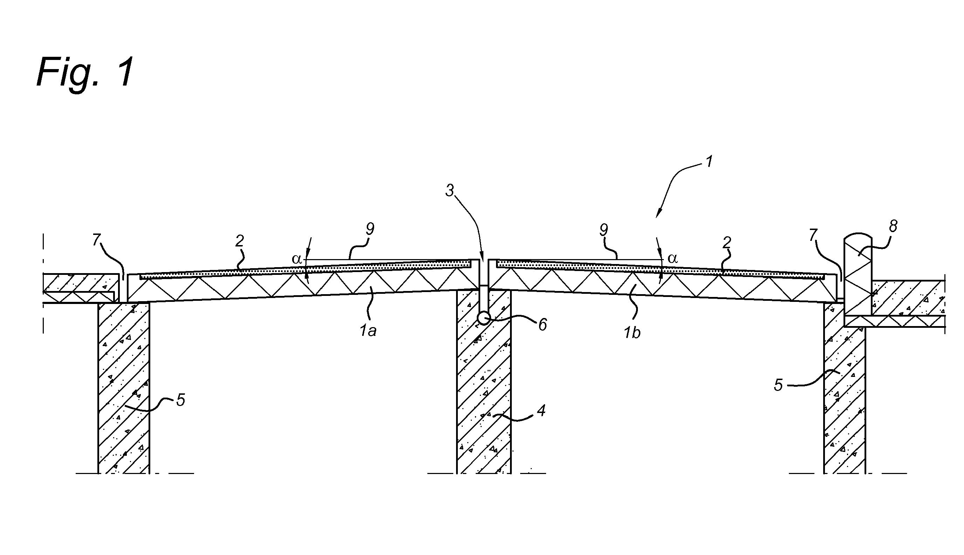

In Fig. 1 a sectional view of a part of a stable floor is shown using a floor section 1 according to an embodiment of the present invention. A plurality of floor sections are positioned adjacent to each other to form the stable floor. The floor section 1 comprises a central guide slot 3 along a lengthwise direction of the stable floor for guiding a manure drawer. When installed, the adjacent floor sections 1 form fluid gutters 7 at side parts of the floor section 1 along the lengthwise direction of the stable floor. The floor section 1 has an inverted V shape with the central guide slot 3 at its apex, and two upper surfaces 2 at an angle α of between 2-6% to a level reference surface 9 as indicated in Fig. 1. The floor sections 1 are used for parts of the stable floor where the animals are most of the time, e.g. next to the feeding gates or other traffic parts of the stable floor. This level of inclination of the inverted V shape of the floor section 1 already provides for a very good separation of fluid contents from the manure under gravity alone, and the fluid content (urine) can easily be collected and removed using the gutters 7. The remaining thicker parts of the manure can then be removed from the stable floor at regular intervals using a drawer guided along the central guide slot 3. In further embodiments, the angle α is between 3-6%, or even between 4-6% (e.g. about 4%). These ranges and values of the inclination further enhances the gravity based separation of liquid content of the manure, yet still allows the stable floor to be used in a normal manner, without risk of animals tripping or falling down.

To further improve the stable floor, the upper surface 2 has a roughness of at least 63 in a further embodiment, as measured using the Leroux method, i.e. according to Dutch norm NEN2873. The roughness as specified will ensure that animals can walk safely on the inclined floor sections of the stable floor. As an alternative specification of the floor section, the upper surface 2 has a dynamic friction value of at least 0.60 in an even further embodiment, e.g. measured using a FSC2000 measurement device. This is in accordance with the Dutch technical advice NTA 7909:2003, or DIN Norm 51131. Also the FSC3 device may be used for measuring such a characteristic floor surface value.

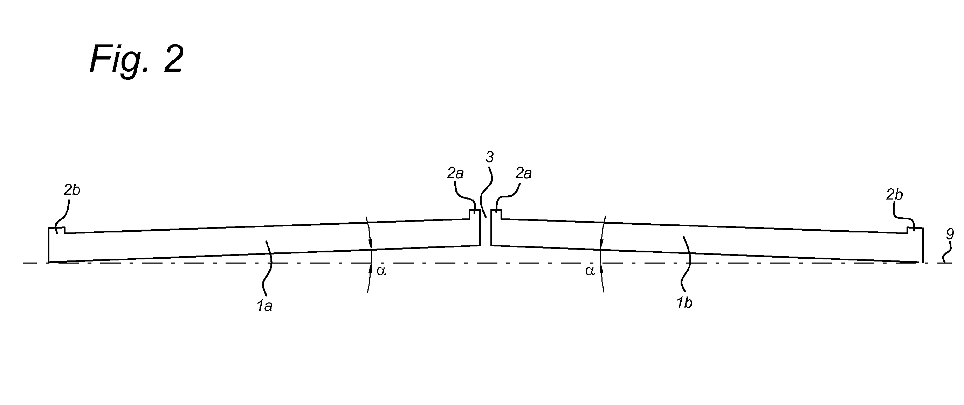

The floor section 1 in the embodiment shown in Fig. 1 is formed by two slab elements 1a, 1b positioned on a central floor beam 4 and two side floor beams 5. This allows easy and correct placement of the slab elements 1a, 1b with the correct inclination. Furthermore, the slab elements 1a, 1b can then be manufactured in a similar manner, as is seen in the cross sectional view of the slab elements 1a, 1b in Fig. 2. In this drawing the slab elements 1a, 1b are shown as if installed in the stable floor, but without the surrounding parts and elements of the floor section 1 and stable floor. The slab elements 1a, 1b are similarly shaped and of even thickness throughout. The level surface is again indicated by reference numeral 9, and it is clear that the underside surfaces of the slab elements 1a, 1b then also are at an angle α of between 2-6%, e.g. between 3-6%. Tests have been executed with a floor sections where the angle α was about 4%, and here the ammonia emissions were drastically reduced as compared to existing solutions.

It is noted however, that it would also be possible to combine the slab elements 1a, 1b as a one piece floor section 1 (with integrated central guide slot 3). Furthermore, it would also be possible to use a regular (concrete or other type) foundation used in building stables to form the supports for the floor sections 1 as an alternative for the central floor beam 4 and side floor beams 5 as shown in the embodiments of Fig. 1 and 2. Also it is noted that the present invention embodiments may be implemented in stables not having a slurry pit.

In order to ensure that the drawer used to collect the thick fraction of the manure at a regular interval (e.g. every two hours) can operate effectively and over a long service life, the floor section 1 advantageously comprises one or more concrete slide parts (e.g. formed as concrete rails) 2a, 2b for allowing the manure drawer to slide along the stable floor. In combination with a proper guidance mechanism in the central guide slot 3, one slide part (e.g. the outer slide part 2b) may suffice, however, proper operation would be more robust using both an inner slide part 2a and an outer slide part 2b for each slab element 1a, 1b.

The floor section 1 comprises a concrete material in a group of embodiments, specifically the slab elements 1a, 1b as discussed above with reference to Fig. 2 can be made of concrete (including the slide parts 2a, 2b).

In combination with such material selection, the upper surface 2 of the floor section 1 may comprise a profiled upper layer of concrete, in order to enhance grip of the upper surface 2.

In a more advantageous embodiment, the upper surface 2 of the floor section 1 comprises a layer of pouring asphalt. This ensures that the floor section 1 is sufficiently fluid tight, caused by having the mineral grains in an excess amount of bitumen in the pouring asphalt. In order to ensure compatibility with the use in a stable floor, the pouring asphalt may comprises rounded grains. This results in less wear of hooves of the animals using the stable floor. The pouring asphalt may additionally comprise sand particles, in order to further provide additional friction.

As an alternative, the upper surface 2 of the floor section 1 comprises a layer of rubber material. This provide a stable floor with a softer upper surface, which is also easier to clean, and allows proper operation of the drawer. As an even further alternative the upper surface 2 of the floor section 1 comprises a layer of synthetic material. The characteristics of the upper surface 2 can then be controlled in many ways by selecting the proper type and handling of the synthetic material.

In order to further increase the grip of the upper surface 2, but also in order to improve the fluid removal towards the gutters 7, the upper surface 2 may be provided with a surface relief, e.g. in the form of a three-dimensional profile.

To even further reduce the ammonia emissions from a stable floor, the floor section 1 in a further embodiment comprises a water conduit 6 with openings in communication with the central guide slot 3. The water conduit 6 may be used to provide additional flushing water to upper surfaces 2 of the stable floor, which assists in a more effective and quick separation of the fluid and more solid fractions of the manure, with an improved ammonia emission of the stable floor as a result. The water conduit 6 may be provided as in integrated channel in the main floor beam 5 aligned with the central guide slot 3 of the floor sections 1, or as an actual channel with apertures or openings at regular intervals, providing a constant water level and supply in the central guide slot 3. Alternatively, the water conduit 6 may be embodied as a separate pipe positioned in a groove in the main floor beam 5 corresponding with the central guide slot 3 of the floor section 1. E.g. T-parts may then be provided at regular intervals (e.g. every 7 m) in the water conduit 6 to provide the communication channels towards the upper surfaces 2.

The present invention embodiments have been described above with reference to a number of exemplary embodiments as shown in the drawings. Modifications and alternative implementations of some parts or elements are possible, and are included in the scope of protection as defined in the appended claims.

## Claims

1. Floor section for a stable floor, wherein a plurality of floor sections (1) positioned adjacent to each other forms the stable floor,
wherein the floor section (1) comprises a central guide slot (3) along a lengthwise direction of the stable floor for guiding a manure drawer, and in operation forms fluid gutters (7) at side parts of the floor section (1) along the lengthwise direction of the stable floor,
wherein the floor section (1) has an inverted V shape with the central guide slot (3) at its apex, and two upper surfaces (2) at an angle (α) of between 2-6% to a level reference surface (9).

2. Floor section for a stable floor according to claim 1, wherein the floor section (1) is formed by two slab elements (1a, 1b) positioned on a central floor beam (4) and two side floor beams (5).

3. Floor section for a stable floor according to claim 1 or 2, wherein the angle (α) is between 3-6%, e.g. about 4%.

4. Floor section for a stable floor according to any one of claims 1-3, wherein the upper surface (2) has a roughness of at least 63 measured using the Leroux method.

5. Floor section for a stable floor according to any one of claims 1-4, wherein the upper surface (2) has a dynamic friction value of at least 0.60, measured using a FSC2000 measurement device.

6. Floor section for a stable floor according to any one of claims 1-5, wherein the floor section (1) comprises concrete material.

7. Floor section for a stable floor according to claim 6, wherein the upper surface (2) of the floor section (1) comprises a profiled upper layer of concrete.

8. Floor section for a stable floor according to claim 6, wherein the upper surface (2) of the floor section (1) comprises a layer of pouring asphalt.

9. Floor section for a stable floor according to claim 8, wherein the pouring asphalt comprises rounded grains.

10. Floor section for a stable floor according to claim 8 or 9, wherein the pouring asphalt additionally comprises sand particles.

11. Floor section for a stable floor according to claim 6, wherein the upper surface (2) of the floor section (1) comprises a layer of rubber material.

12. Floor section for a stable floor according to claim 6, wherein the upper surface (2) of the floor section (1) comprises a layer of synthetic material.

13. Floor section for a stable floor according to any one of claims 6-12, wherein the upper surface (2) is provided with a surface relief.

14. Floor section for a stable floor according to any one of claims 1-13, wherein the floor section (1) comprises one or more concrete slide parts (2a, 2b) for allowing the manure drawer to slide along the stable floor.

15. Floor section for a stable floor according to any one of claims 1-14, wherein the floor section (1) further comprises a water conduit (6) with openings in communication with the central guide slot (3).
